# EUROPEAN PATENT APPLICATION

(11) **EP 2 705 975 A1**
(43) Date of publication of application: **12.03.2014**
(21) Application number: 11874586.8
(22) Date of filing: 25.10.2011
(51) Int. Cl.: B60L 11/18, B60K 1/04, H01R 13/639, H02J 7/00

(54) **VEHICLE CHARGING DEVICE**

(71) Applicant: Sumitomo Wiring Systems, Ltd., Yokkaichi-shi, Mie 510-8503 (JP)
(72) Inventor: OSAWA Kiyoshi, Yokkaichi-shi Mie 510-8503 (JP); SHIMIZU Tooru, Yokkaichi-shi Mie 510-8503 (JP); ICHIO Toshifumi, Yokkaichi-shi Mie 510-8503 (JP)
(74) Representative: Müller-Boré & Partner Patentanwälte PartG mbB
(86) International application number: PCT/JP2011/074488
(87) International publication number: WO 2013/061401

(57) **Abstract**

A vehicle charging device configured such that both connectors 10, 20 are locked in a connected state by an advancing movement of a locking portion 43 of an actuator 41 to be locked to a locked portion 18 when the connection of the both connectors 10, 20 is detected by a connection detector 31 includes a locking portion detector 51 for detecting whether or not the locking portion 43 of the actuator 41 has advanced to a predetermined locking position, and a power supply controller 71 for setting a power supply path to an electrically conductive state on a condition that an advancing movement of the locking portion 43 to the predetermined locking position is detected by the locking portion detector 51.

## Description

### [Technical Field]

The present invention relates to a vehicle charging device with an improved lock mechanism.

### [Background Art]

In the case of charging a vehicle equipped with a battery such as an electric vehicle or a plug-in hybrid vehicle, a power supply side connector connected to a power supply is connected to a vehicle side connector provided in the vehicle and connected to the battery such as at home or at a gas station, whereby the battery is charged with power supplied from a commercial power supply. Since this charging requires a relatively long time, the both connectors are often left in a connected state. During that time, the power supply side connector may inadvertently come off such as because a power supply cord is tripped over or the power supply side connector may be unduly pulled out for the purpose of stealing electricity. Thus, measures for preventing these need to be taken.

Conventionally, a charging device provided with an electromagnetic lock mechanism is proposed as an example of the preventive measure. This includes a locked portion provided in a housing of a power supply side connector, whereas a solenoid-type actuator is provided in a vehicle side connector. When the power supply side connector is connected to the vehicle side connector and the proper connection of the both connectors is detected, a locking portion advances and is locked to the locked portion to effect locking as the actuator is exited, and then a power supply path is set to an electrically conductive state and charging is performed. When predetermined charging is completed after the passage of time, the power supply path is cut off. Subsequently, as the actuator is brought into a non-exciting state, the locking portion retreats and is disengaged from the locked portion, whereby locking is released and the power supply side connector can be detached. Note that this type of a charging device provided with an electromagnetic lock mechanism is disclosed in patent literature 1 below.

### [Citation List]

### [Patent Literature]

Patent Literature 1: Japanese Unexamined Patent Publication No. 2011-81952

### [Summary of the Invention]

### (Problem the Invention Seeks to Solve)

In the above conventional electromagnetic lock mechanism, the locking portion of the actuator may be damaged, e.g. a tip part may be missing for some reason. When the tip part of the locking portion remains to be missing, even if the actuator is excited and the locking portion advances, the locking portion may be stopped before the mating locked portion or may advance only to a halfway position. As a result, charging is performed in a state where locking is not effected or in a half-locked state. In other words, the power supply side connector is in a detachable state during charging, which may lead to problems that a spark is generated between connection terminals of the both connectors in an initial stage of detachment and electricity stealing is enabled.

### Measures against these have been an urgent need.

The present invention was completed based on the above situation and aims to detect the damage of a locking portion of an actuator constituting an electromagnetic lock mechanism and prevent a charging operation from being performed in such a case.

### (Solution to Problem)

The present invention is directed to a vehicle charging device with a power supply side connector connected to an external power supply, a vehicle side connector connected to a battery mounted in a vehicle and provided in the vehicle to form a power supply path by being connected to the power supply side connector, a connection detector for detecting whether or not the both connectors have been connected, a locked portion provided in the power supply side connector, and a solenoid-type actuator provided in the vehicle side connector and including a locking portion to be locked to the locked portion and capable of being driven to advance and retreat, the both connectors being locked in a connected state by an advancing movement of the locking portion of the actuator to be locked to the locked portion when the connection of the both connectors is detected by the connection detector, including a locking portion detector for detecting whether or not the locking portion of the actuator has advanced to a predetermined locking position; and a power supply controller for setting the power supply path to an electrically conductive state on a condition that an advancing movement of the locking portion to the predetermined locking position is detected by the locking portion detector.

When the locking portion of the actuator is not damaged, locking is effected, the power supply path is set to the electrically conductive state and charging is performed as the locking portion advances. On the other hand, if the locking portion of the actuator is damaged, there is a possibility that locking is incomplete. However, the power supply path is kept in the cut-off state by the indirect detection of the damage by the locking portion detector. Thus, the both connectors are prevented from being inadvertently or unduly detached during charging, whereby it is possible to prevent the generation of a spark between the both connectors and electricity stealing.

Further, the following configurations may be adopted.
(1) The vehicle charging device further includes a movement detector for detecting advancing and retreating movements of the locking portion of the actuator; a lock error discriminator provided in the power supply controller and configured to send an error signal when the locking portion detector does not detect the advancing movement of the locking portion to the predetermined locking position despite the detection of the advancing movement of the locking portion by the movement detector, and a warning unit for giving a warning in response to the error signal.

If it is detected that the locking portion of the actuator has not reached the predetermined position despite the advancing movement thereof, the locking portion is assumed to be damaged and an error signal is output. In response to the error signal, a warning is given from the warning unit. By receiving the warning, a repair or the like can be quickly dealt with.
(2) A housing of the power supply side connector includes a receptacle into which a housing of the vehicle side connector is fittable, and a locked hole is formed on the receptacle, thereby forming the locked portion; the actuator including a locking pin movable back and forth through the locked hole is provided in the housing of the vehicle side connector, and the locking portion is formed by the locking pin; and a detection switch whose open and closed states are reversed by being pressed by the tip of the locking pin when the locking pin moves to a predetermined advanced position is provided at a position of the housing of the vehicle side connector corresponding to the inside of the locked hole when the both housings are connected, and the locking portion detector is formed by the detection switch.

If the tip of the locking portion of the actuator is not lacking, locking is effected when the locking portion advances through the mating locked hole and the tip of the locking portion presses the detection switch to switch the open/closed state. In this way, the power supply path is set to the electrically conductive state and charging is performed. On the other hand, if the tip of the locking portion of the actuator is lacking, there is a possibility that locking is incomplete. However, the lacking of the tip is detected by that the detection switch is not pressed, whereby the power supply path is kept in the cut-off state, i.e. charging is not performed.

### (Effect of Invention)

According to the present invention, it is possible to detect the damage of a locking portion of an actuator constituting an electromagnetic lock mechanism and prevent a charging operation from being performed in such a case.

### [Brief Description of Drawings]

FIG 1 is a perspective view showing a state before a power supply side connector and a vehicle side connector according to one embodiment of the present invention are connected,
FIG. 2 is a longitudinal sectional view showing the state of FIG. 1,
FIG 3 is a perspective sectional view of the vehicle side connector,
FIG 4 is a longitudinal section showing a state where the power supply side connector and the vehicle side connector are properly connected,
FIG 5 is a longitudinal section when there is a failure in an advancing or retreating movement of a locking pin of an actuator,
FIG. 6 is a longitudinal section when the locking pin of the actuator is damaged,
FIG 7 is a longitudinal section when a locked portion is damaged,
FIG 8 is a block diagram showing a charging control mechanism,
FIG 9 is a flow chart outlining a charging control system,
FIG 10 is a flow chart showing a power supply control mode, and
FIG 11 is a flow chart showing a mode for detecting a return failure of the locking pin of the actuator.

### [Embodiment of Invention]

### <Embodiment>

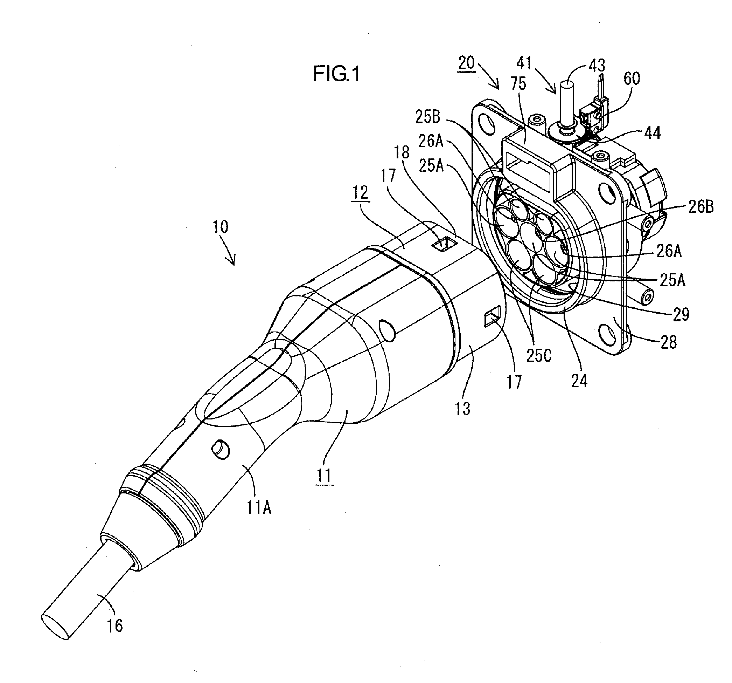

One embodiment of the present invention is described based on FIGS. 1 to 11.

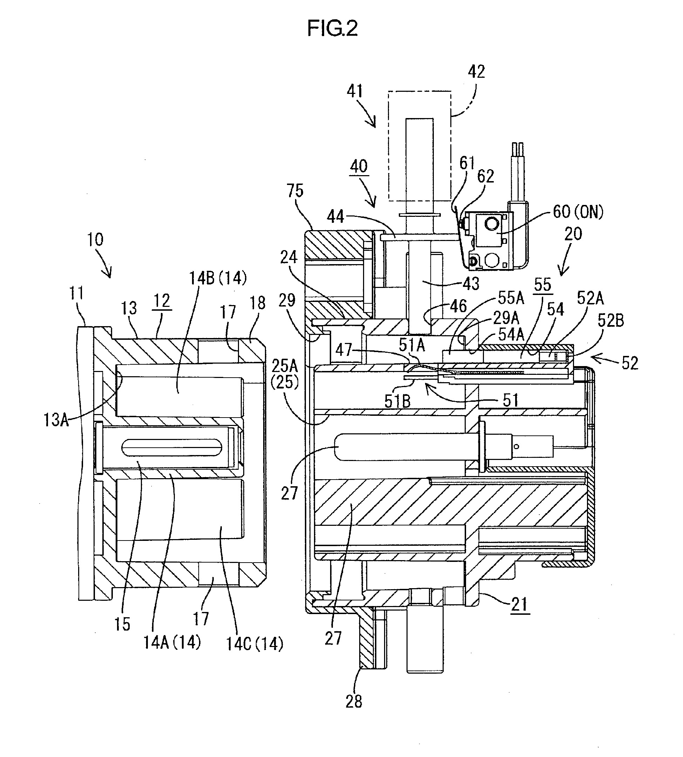

As shown in FIGS. 1 and 2, a vehicle charging device of this embodiment includes a power supply side connector 10 connected to a power supply and a vehicle side connector 20 connected to a battery mounted in a vehicle and provided in the vehicle.

The power supply side connector 10 is so structured that a female housing 12 is provided on a tip part of a connector main body 11 with a grip part 11A, both the connector main body 11 and the female housing 12 being made of synthetic resin. The female housing 12 is so structured that seven terminal accommodating tubes 14 independent of each other and projecting from the back wall are provided in a small receptacle 13 (corresponding to a receptacle of the present invention). Two, three and two terminal accommodating tubes 14 are respectively arranged in an upper row, a middle row and a lower row in correspondence with the arrangement of seven cavities 25 provided in a mating male housing 21 to be described later.

Out of the above terminal accommodating tubes 14, female power terminals for AC are accommodated in the terminal accommodating tubes 14A on the opposite sides of the middle row, a female ground terminal 15 is accommodated in the middle terminal accommodating tube 14A of the middle row, and female signal terminals are accommodated in the both terminal accommodating tubes 14B of the upper row. Note that although the both terminal accommodating tubes 14C in the lower row are for accommodating female power terminals for DC, they are empty in this connector 10. Wires connected to the respective female connection terminals are bundled in the connector main body 11 and drawn out from the rear end of the grip part 11A in the connector main body 11 in the form of a multi-core cable.

The vehicle side connector 20 includes the male housing 21 likewise made of synthetic resin. The male housing 21 includes a terminal accommodating portion 22 whose front end side is fittable into the small receptacle 13 of the above female housing 12, and a large receptacle 24 formed to be fittable onto the outer periphery of the small receptacle 13 to surround the front end side of the terminal accommodating portion 22. As partly already described, seven cavities 25 into which the respective terminal accommodating tubes 14 of the above female housing 12 are fittable from front are formed in a corresponding arrangement in the terminal accommodating portion 22 of the male housing 21.

A male connection terminal is so accommodated in each cavity 25 as to project from the back wall. Specifically, male power terminals 26A for AC are accommodated in the cavities 25A on the opposite sides of a middle row, a male ground terminal 26B is accommodated in the middle cavity 25A of the middle row, and male signal terminals 26C are accommodated in the both cavities 25B in an upper row. Male power terminals for DC may be accommodated in the both cavities 25C in a lower row or these cavities may be empty.

A rectangular mounting plate 28 is formed in a projecting manner at a position of the outer peripheral surface of the large receptacle 24 of the male housing 21 near the tip and four corners of this mounting plate 28 are fixed to a mounting member arranged in a power supply port open on the body of the vehicle by screws, whereby the male housing 21 is mounted in such a manner that a connection surface thereof is facing the power supply port.

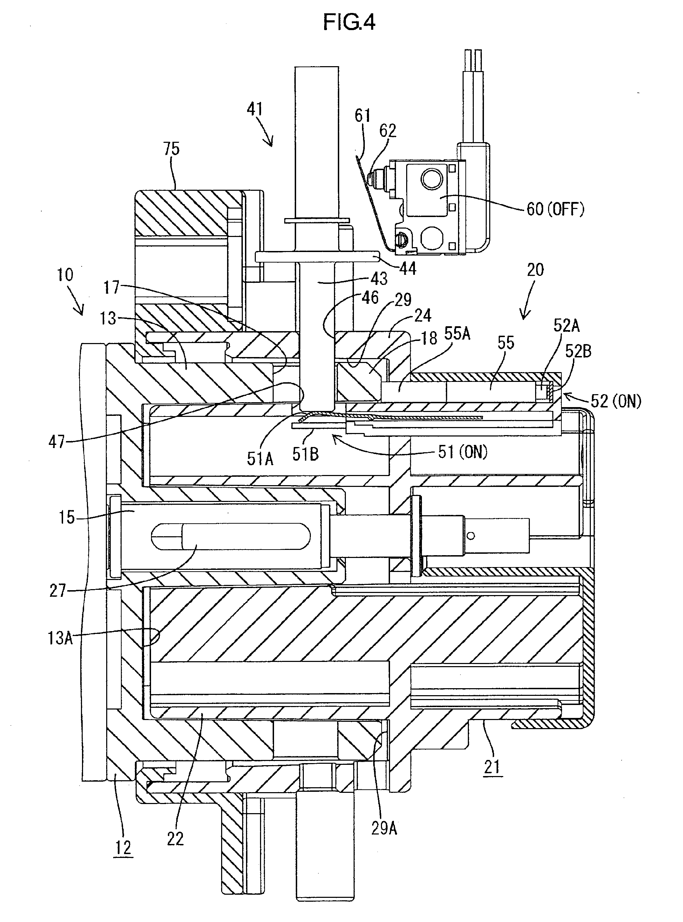

When the female housing 12 of the power supply side connector 10 is connected to the male housing 21 of the vehicle side connector 20, the terminal accommodating portion 22 of the male housing 21 is inserted into the small receptacle 13 of the female housing 12, the small receptacle 13 of the female housing 12 is inserted into a receptacle entrance groove 29 formed between the terminal accommodating portion 22 and the large receptacle 24 in the male housing 21, the front surface of the terminal accommodating portion 22 comes into contact with a back wall 13A of the small receptacle 13 and the tip edge of the small receptacle 13 comes into contact with a back wall 29A of the receptacle entrance groove 29 as shown in FIG 4, whereby a connecting operation is stopped and this position becomes a proper connection position.

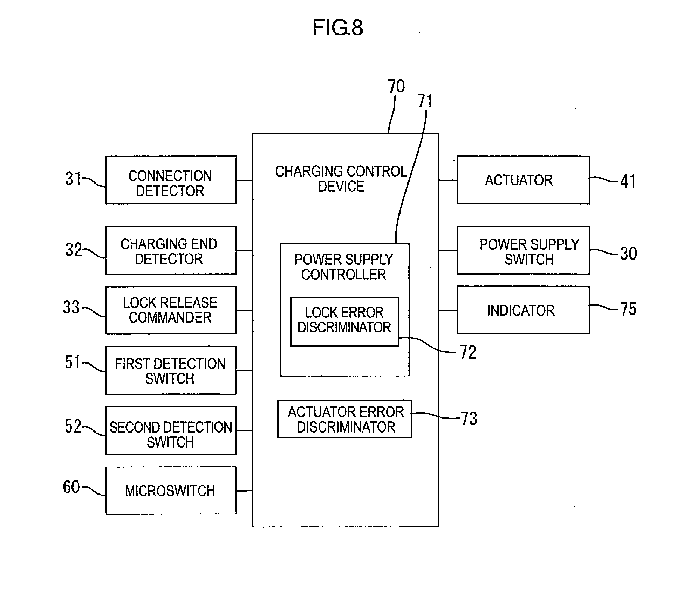

When the both connectors 10, 20 are properly connected, the corresponding male and female connection terminals provided in the both connectors 10, 20 are connected to each other. When the power terminals including the ground terminals are connected, a power supply path is formed between the power supply and the battery mounted in the vehicle. A power supply switch 30 (see FIG 8) for switching the state of the power supply path between an electrically conductive state and a cut-off state is provided in this power supply path.

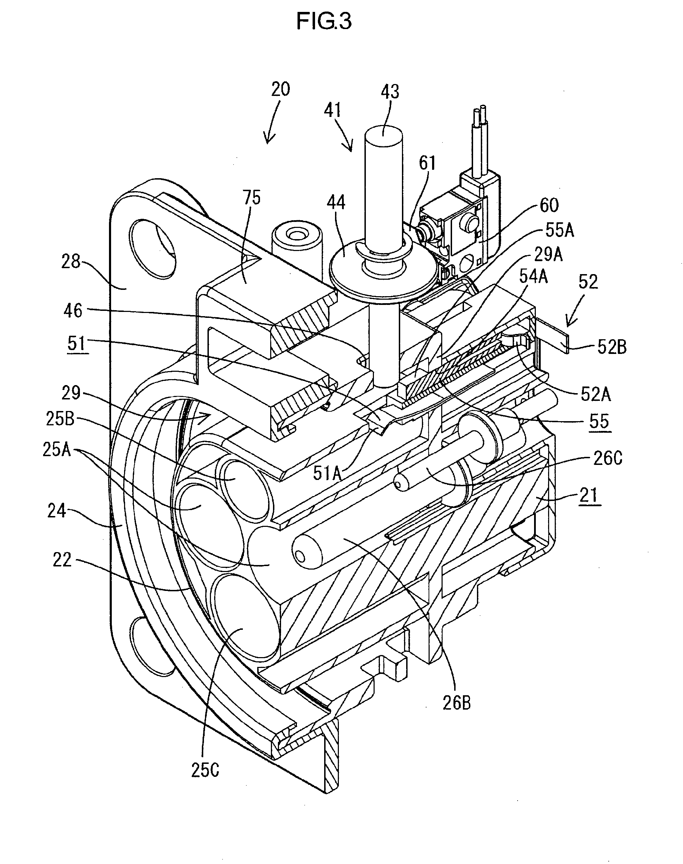

On the other hand, when two pairs of male and female signal terminals are connected to each other, two signal lines are formed. In this embodiment, one out of these is used for connection detection of the both connectors 10, 20. Thus, the corresponding male and female signal terminals (only the male signal terminal 26C is shown in FIG 3) serve as connection detection terminals and a connected part of the connection detection terminals serve as a connection detector 31.

An electromagnetic lock mechanism 40 is provided which locks the housings 12, 21 of the both connectors 10, 20 in a properly connected state.

As shown in FIG 2, a locked hole 17 is formed at a position of the upper surface of the small receptacle 13 near the tip in the female housing 12 provided in the power supply side connector 10.

On the other hand, a solenoid-type actuator 41 is provided in the vehicle side connector 20. This actuator 41 is so provided that a locking pin 43 is movable between a retreated position (FIG 2) and an advanced position (FIG 4) relative to a main body 42 and the locking pin 43 is constantly biased toward the retreated position by a spring force. When the actuator 41 is energized and excited, the locking pin 43 moves to the advanced position against a biasing force.

Note that the locked hole 17 of the small receptacle 13 of the female housing 12 is also formed on the lower, left and right surfaces so as to deal with cases where the actuator 41 is arranged at a lower position and left and right positions besides the upper position described above.

A guide hole 46 into which the locking pin 43 of the actuator 41 is tightly insertable is formed at a position of the upper surface of the large receptacle 24 near the rear end in the male housing 21 of the vehicle side connector 20, specifically at a position right above the locked hole 17 of the small receptacle 13 when the female and male housings 12, 21 are properly connected. Further, an escaping recess 47 for allowing a tip part of the locking pin 43 to escape is formed on the upper surface of the terminal accommodating portion 22, i.e. at a position of the lower surface of the receptacle insertion groove 29 right below the guide hole 46. Note that the guide hole 46 and the escaping recess 47 are also provided on the lower, left and right surfaces in correspondence with the arrangement position of the above actuator 41.

The actuator 41 is mounted onto the vehicle side connector 20 in a posture facing right below with the tip of the locking pin 43 inserted in the guide hole 46.

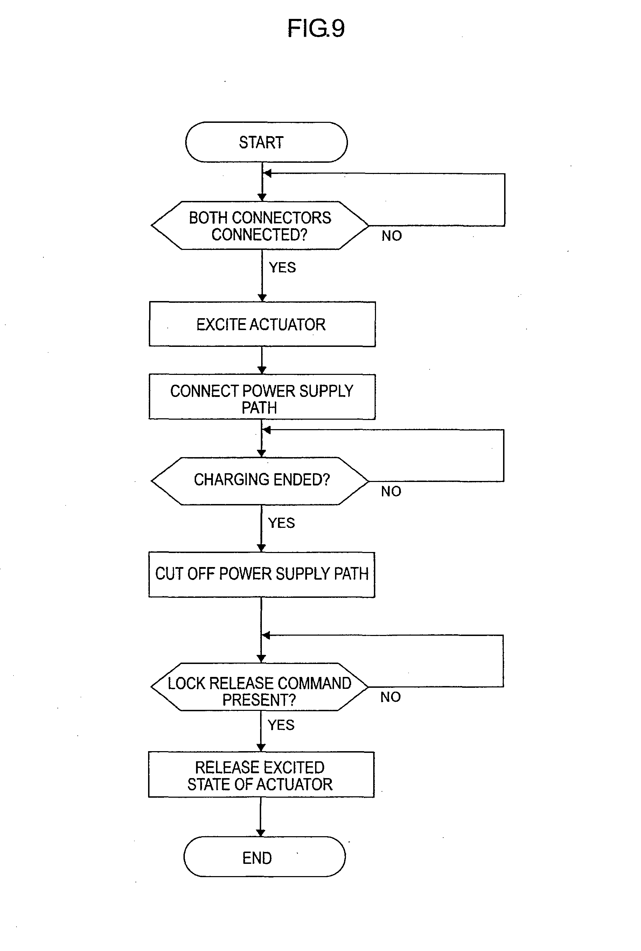

A basic charging control system including a locking operation by the electromagnetic lock mechanism 40 is described below with reference to FIGS. 8 and 9.

When the proper connection of the both connectors 10, 20 is detected through the connection of a pair of signal terminals constituting the connection detector 31, the actuator 41 is excited, whereby the locking pin 43 at the retreated position moves to the advanced position, the tip of the locking pin 43 reaches the escaping recess 47 through the locked hole 17 of the small receptacle 13 and the locking pin 43 is locked to a front edge part (locked portion 18) of the locked hole 17. In this way, the both connectors 10, 20 are locked in the properly connected state and, subsequently, the power supply switch 30 is turned on to set the power supply path to the electrically conductive state and charging is performed.

When the end of predetermined charging is detected by a charging end detector 32 (FIG 8) provided in the vehicle side connector 20, the power supply switch 30 is turned off to cut off the power supply path. Subsequently, when a lock release command is issued from a lock release commander 33 (FIG 8), power application to the actuator 41 is cut off to set the actuator 41 to a non-exciting state, whereby the locking pin 43 returns to the retreated position to release locking and a state is entered where the power supply side connector 10 is detachable. Note that a release command signal from the lock release commander 33 may be sent upon the detection of the charging end or by operating an operation unit separately provided on the vehicle side.

In this embodiment, measures are taken such as to indicate an operation failure and restrict a power supplying operation in the case of this operation failure, considering that the electromagnetic lock mechanism 40 does not properly operate. These measures are described below.

Basically, various detectors are provided which detect the presence or absence of a failure in each constituent component of the electromagnetic lock mechanism 40, signals and the like from such detectors are computed by a power supply controller 71 (FIG 8) and various members are controlled based on the computation result.

First, as shown in FIG 2, a first detection switch 51 (locking portion detector) is provided as a means for detecting a failure in the locking pin 43 of the actuator 41. This first detection switch 51 is a normally open switch including a pair of movable contacts 51 A and a fixed contact 5 1 B, and arranged such that the movable contacts 51 A are faced up in the escaping recess 47 provided on the bottom surface of the receptacle insertion groove 29 in the above male housing 21.

When the actuator 41 is excited and the locking pin 43 moves to the proper advanced position, the tip of the locking pin 43 presses the movable contacts 51A and brings them into contact with the fixed contact 51B, whereby the first detection switch 51 is turned on.

On the other hand, for example, if the locking pin 43 cannot move to the proper position for some reason or if the tip part of the locking pin 43 is lacking, the tip of the locking pin 43 cannot press the movable contacts 51A despite the advancing movement of the locking pin 43 and the first detection switch 51 is kept off.

Further, a second detection switch 52 (locked portion detector) is provided as a means for detecting a failure that the locked portion 18 constituting one side of the electromagnetic lock mechanism 40 is missing. This second detection switch 52 is similarly a normally open switch including a pair of movable contacts 52A and a fixed contact 52B.

The second detection switch 52 is arranged at the following position. As also shown in FIG. 3, a guide path 54 extending along forward and backward directions is formed in an area behind the back wall 29A of the receptacle insertion groove 29 on the upper surface of the terminal accommodating portion 22 of the male housing 21, more specifically in an area behind the arrangement position of the first detection switch 51, and the second detection switch 52 is mounted in a rear end part of this guide path 54 with the movable contacts 52A arranged on a front side.

An operating plate 55 is placed in the guide path 54 slidably in forward and backward directions, and a pushed piece 55A projecting from the front surface of the operating plate 55 projects into the receptacle insertion groove 29 through a guide hole 54A formed on the back wall 29A.

When the female housing 12 of the power supply side connector 10 is properly connected to the male housing 21 of the vehicle side connector 20, the locked portion 18 pushes the pushed piece 55A to retreat the operating plate 55 by a predetermined amount and the rear edge of the operating plate 55 pushes the movable contacts 52A and brings them into contact with the fixed contact 52B to turn on the second detection switch 52 if the locked portion 18 is properly present.

On the other hand, if the locked portion 18 is damaged and missing, the pushed piece 55A, i.e. the operating plate 55 cannot be pushed backward, i.e. the movable contacts 52A cannot be pushed and the second detection switch 52 is kept off even if the both connectors 10, 20 are properly connected.

Further, a movement detector is provided which detects advancing and retreating movements of the locking pin 43 of the actuator 41.

Specifically, a microswitch 60 is arranged laterally of a movement path for the locking pin 43 of the actuator 41, whereas a flange 44 engageable with an operation lever 61 of the microswitch 60 is formed on the outer periphery of a base end part of the locking pin 43.

The microswitch 60 is, for example, a normally open switch. When the locking pin 43 is at the retreated position, the flange 44 pushes a button 62 via the operation lever 61 to turn on the microswitch 60 as shown in FIG. 2. On the other hand, when the locking pin 43 advances by a predetermined amount or more as shown in FIG 4, the flange 44 is separated and a force pressing the operation lever 61 is released to return the button 62, whereby the microswitch 60 is turned off.

The microswitch 60 as the movement detector, the first detection switch 51 as the locking portion detector and the second detection switch 52 as the locked portion detector described above are connected to an input side of a charging control device 70 as shown in FIG. 8.

A power supply controller 71 including a lock error discriminator 72 is built in the charging control device 70 to deal with cases where the electromagnetic lock mechanism 40 does not properly operate, specifically both a case where there is a failure in the locking pin 43 of the actuator 41 and a case where the locked portion 18 is missing.

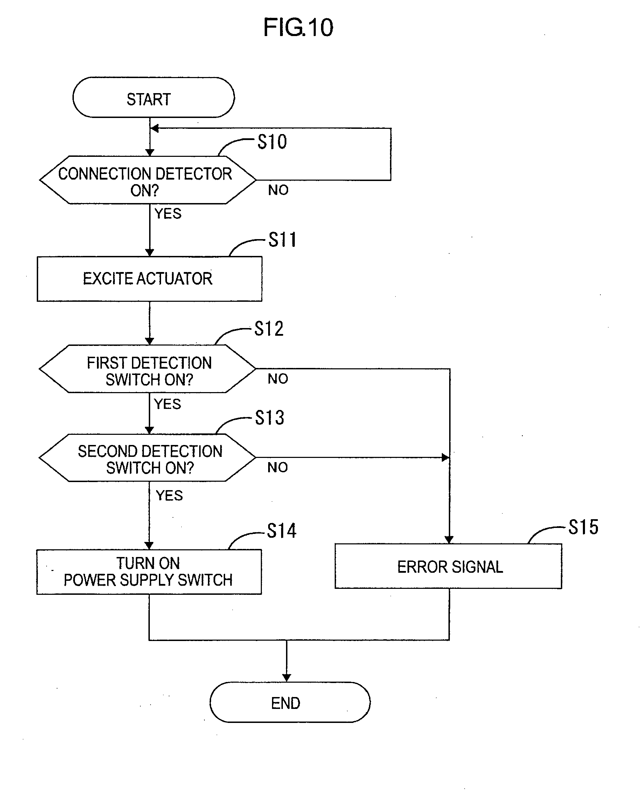

In the power supply controller 71, a program as shown in FIG 10 is executed. In short, when the proper connection of the both connectors 10, 20 is detected, the actuator 41 is excited and, thereafter, the power supply path is set to the electrically conductive state only after the both detectors are turned on. An error signal is output if one of the both detectors is off and an indication is made by an indicator 75 in response to this error signal.

This indicator 75 includes an indicator lamp formed of a light-emitting diode and is, as shown in FIG 1, provided at an upper position of the mounting plate 28 on the male housing 21 of the vehicle side connector 20 so as to be visible through the power supply port.

Further, in this embodiment, an actuator error discriminator 73 is built in the charging control device 70 to deal with a case where the locking pin 43 of the actuator 41 does not properly return to the retreated position in releasing locking.

Thus, the lock release commander 33 is connected to the input side of the charging control device 70 as partly already described. The lock release commander 33 is interlocked with the charging end detector 32 and outputs a lock release command signal upon detecting the end of the charging. Note that the lock release commander 33 outputs a lock release command signal upon the operation of a lock release operation unit separately provided on the vehicle side.

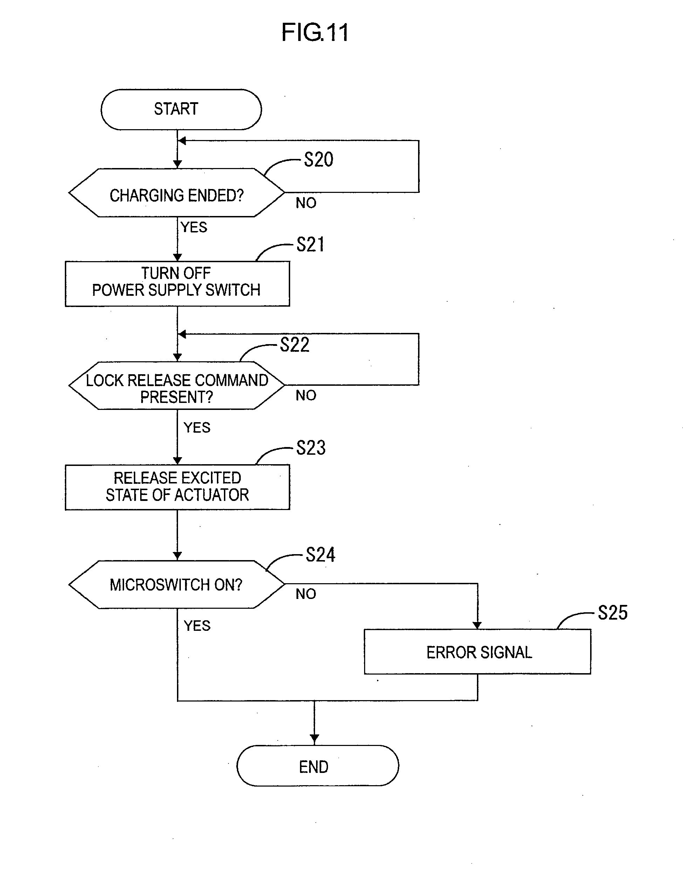

In the actuator error discriminator 73, a program as shown in FIG. 11 is executed. Specifically, when the end of the charging is detected, the power supply path is cut off. Thereafter, when a lock release command is received, the excited state of the actuator is released. At that time, if the return of the locking pin 43 to the retreated position is not detected, an error signal is output and an indication is made by the indicator 75 in response to this error signal. Note that an indicator lamp different from the above indicator lamp may be turned on in the indicator 75.

Next, functions of this embodiment are described.

First, with reference to a flow chart of FIG 10, when the power supply side connector 10 is properly connected to the vehicle side connector 20 as shown in FIG. 4, a pair of signal terminals are connected to turn on the connection detector 31 ("YES" in Step S10), whereby the actuator 41 is energized and excited (Step S11). This causes the locking pin 43 to advance to penetrate through the locked hole 17 of the male housing 21. Subsequently, in Step S12, whether or not the first detection switch 51 is on is discriminated. If the first detection switch 51 is on ("YES" in Step S12), the tip of the locking pin 43 reaches the proper advanced position, i.e. the locking pin 43 is assumed to have properly penetrated through the locked hole 17, and a transition is made to Step S13. In Step S13, whether or not the second detection switch 52 is on is discriminated. If the second detection switch 52 is on ("YES" in Step S 13), the locked portion 18, which is the front edge of the locked hole 17 of the male housing 21, is present and locked to the locking pin 43, i.e. the electromagnetic lock mechanism 40 is assumed to have properly operated to effect locking. In Step S 14, the power supply switch 30 is switched to the electrically conductive state to start charging.

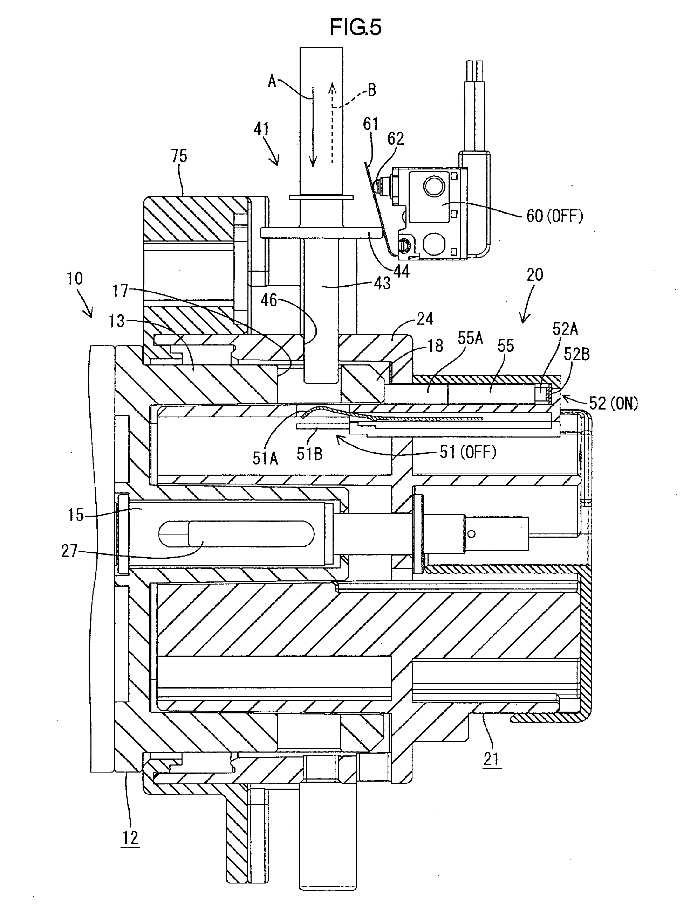

Here, if there is an operation failure in the electromagnetic lock mechanism 40, e.g. if the locking pin 43 has not reached the proper advanced position for some reason despite the advancing movement of the locking pin 43 of the actuator 41 as shown by an arrow A of FIG 5, i.e. if a half-locked state is set, the first detection switch 51 is kept off ("NO" in Step S12) since the locking pin 43 does not press the movable contacts 51 A of the first detection switch 51. In Step S 15, a lock error is assumed and an error signal is sent. In response to this error signal, the indicator lamp of the indicator 75 is turned on to notify a failure in the electromagnetic lock mechanism 40. On the other hand, the power supply switch 30 is kept off and charging is not performed.

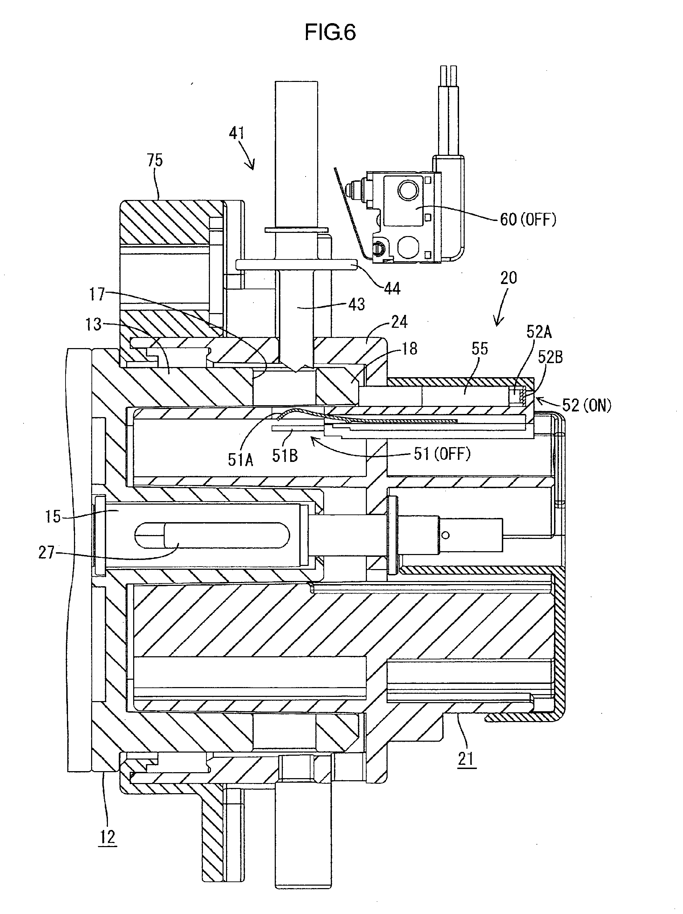

Further, as shown in FIG. 6, also when the tip part of the locking pin 43 of the actuator 41 is lacking, the first detection switch 51 is kept off ("NO" in Step S12) since the tip of the locking pin 43 does not press the movable contacts 51 A even if the locking pin 43 advances. Likewise in Step S 15, a lock error is assumed and an error signal is sent to turn on the indicator lamp of the indicator 75. Similarly, charging is not performed.

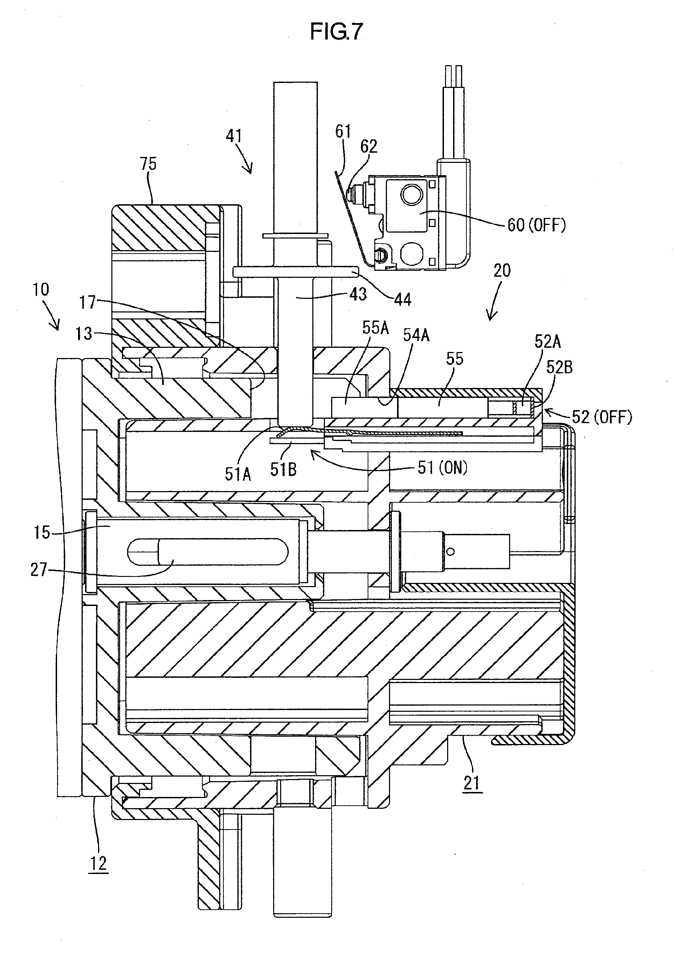

As another case, when the locked portion 18 constituting one side of the electromagnetic lock mechanism 40 is damaged and missing as shown in FIG 7, the second detection switch 52 is kept off ("NO" in Step S 13) since the movable contacts 52A of the second detection switch 52 are not pushed even if the locking pin 43 advances to the proper position and the first detection switch 51 is turned on ("YES" in Step S12). Thus, in Step S15, a lock error is assumed and an error signal is sent to turn on the indicator lamp of the indicator 75 in response to this error signal, thereby notifying a failure in the electromagnetic lock mechanism 40. On the other hand, the power supply switch 30 is kept off and charging is not performed.

As described above, locking may be incomplete and the vehicle side connector 20 may be inadvertently or unduly detached in any of the cases of the half-locked state, the lacking tip part of the actuator 41 and the missing locked portion 18. However, if there is such a failure in the electromagnetic lock mechanism 40, it is detected and charging is restricted and, on the other hand, the presence of this failure is indicated by the indicator 75 to call attention to the repair or the like of the failure.

On the other hand, if the electromagnetic lock mechanism 40 properly operates as described above, charging is subsequently performed. Locking is released in response to a lock release command such as when predetermined charging is completed after the passage of time. At that time, the locking pin 43 of the actuator 41 may not possibly properly return to the retreated position, i.e. locking may not possibly be properly released. A control mode at that time is described with reference to a flow chart of FIG. 11.

In normal time, if the end of the charging is detected ("YES" in Step S20), the power supply switch 30 is turned off in Step S21 to cut off the power supply path. Thereafter, when a lock release command is output ("YES" in Step S22), power application to the actuator 41 is cut off to release the excited state and the locking pin 43 retreats as shown by an arrow B of FIG. 5 in Step S23. When the return of the locking pin 43 to the proper retreated position as shown in FIG 2 is detected by that the microswitch 60 is turned on ("YES" in Step S24), the program ends.

Here, after the excited state of the actuator 41 is released, the locking pin 43 enters a state where it cannot be returned to the proper retreated position for some reason such as a trouble. If this is detected by that the microswitch 60 is not turned on ("NO" in Step S24), an error is assumed and an error signal is sent in Step S25. In response to this error signal, the indicator lamp of the indicator 75 is turned on to notify that the locking pin 43 of the actuator 41 has not returned to the proper retreated position, i.e. locking is not completely released.

If it is attempted to forcibly detach the vehicle side connector 20 in such a state, the electromagnetic lock mechanism 40 may be damaged. Thus, a user or the like is caused to wait for the detaching operation of the vehicle side connector 20 and, in addition, attention is called to the repair or the like of the actuator 41.

According to this embodiment, the following effects can be obtained. Even if the locking pin 43 of the actuator 41 is driven to advance to effect locking, locking may be incomplete if the tip part of the locking pin 43 is lacking. Such damage of the locking pin 43 is detected by that the first detection switch 51 is not turned on. Associated with that, the power supply path is kept in the cut-off state and charging is not performed. In addition, the damage of the locking pin 43 is indicated at the indicator 75 provided on the vehicle side connector 20.

Thus, the power supply side connector 10 is prevented from being inadvertently or unduly detached during charging, whereby it is possible to prevent the generation of a spark between the both connectors 10, 20 and electricity stealing. Further, since an indication indicating the damage of the locking pin 43 of the actuator 41 can be visually confirmed by seeing the indicator 75, a repair or the like can be quickly dealt with in response to this indication.

Note that although locking may be incomplete also when there is a failure in the actuator 41 and the locking pin 43 does not move to the proper advanced position, this failure can also be detected by that the first detection switch 51 is not turned on. Similarly, the power supply path is kept in the cut-off state and charging is not performed. In addition, the occurrence of the failure can be visually confirmed by seeing the indicator 75 provided on the vehicle side connector 20.

### <Other Embodiments>

The present invention is not limited to the above described and illustrated embodiment. For example, the following embodiments are also included in the technical scope of the present invention.
(1) The shape of the locking portion of the actuator provided in the vehicle side connector is not limited to a pin shape such as that of the locking pin illustrated in the above embodiment and may be another shape such as a plate shape or a piece shape as long as the locking portion can be driven to advance and retreat. Further, the locked portion provided in the power supply side connector may have another shape such as that of a projection as long as it can be locked to the locking portion of the actuator.
(2) Although the normally open first detection switch is illustrated as the locking portion detector for detecting the proper advancing movement of the locking portion of the actuator in the above embodiment, the locking portion detector may be a normally closed detection switch that is opened by being pressed by the tip of the locking portion.
(3) Although a lighting indication means for turning on a lamp is adopted as a means for warning a lock error in the above embodiment, a warning tone generation means for sounding a buzzer instead of that may be used or both means may be used in combination.
(4) The charging control system illustrated in the above embodiment is only an example and can be changed as appropriate. For example, the charging end detector may detect the end of the charging such as when a charging time set in advance elapses or when a charging end switch is manually operated besides when the battery is fully charged.
(5) Although the illustrated vehicle side connector is compatible with both ordinary charging and quick charging in the above embodiment, the present invention can be similarly applied also when a vehicle side connector compatible with only either one of ordinary charging and quick charging is provided.

### [List of Reference Signs]

- 10: power supply side connector
- 12: female housing (housing of power supply side connector)
- 13: small receptacle (receptacle)
- 17: locked hole
- 18: locked portion
- 20: vehicle side connector
- 21: male housing (housing of vehicle side connector)
- 30: power supply switch
- 31: connection detector
- 40: electromagnetic lock mechanism
- 41: actuator
- 43: locking pin (locking portion)
- 44: flange
- 51: first detection switch (locking portion detector)
- 60: microswitch (movement detector)
- 70: charging control device
- 71: power supply controller
- 72: lock error discriminator
- 75: indicator (warning unit)

## Claims

1. A vehicle charging device with a power supply side connector connected to an external power supply, a vehicle side connector connected to a battery mounted in a vehicle and provided in the vehicle to form a power supply path by being connected to the power supply side connector, a connection detector for detecting whether or not the both connectors have been connected, a locked portion provided in the power supply side connector, and a solenoid-type actuator provided in the vehicle side connector and including a locking portion to be locked to the locked portion and capable of being driven to advance and retreat, the both connectors being locked in a connected state by an advancing movement of the locking portion of the actuator to be locked to the locked portion when the connection of the both connectors is detected by the connection detector, comprising:
a locking portion detector for detecting whether or not the locking portion of the actuator has advanced to a predetermined locking position; and
a power supply controller for setting the power supply path to an electrically conductive state on a condition that an advancing movement of the locking portion to the predetermined locking position is detected by the locking portion detector.

2. The vehicle charging device of claim 1, further comprising: a movement detector for detecting advancing and retreating movements of the locking portion of the actuator;
a lock error discriminator provided in the power supply controller and configured to send an error signal when the locking portion detector does not detect the advancing movement of the locking portion to the predetermined locking position despite the detection of the advancing movement of the locking portion by the movement detector, and
a warning unit for giving a warning in response to the error signal.

3. The vehicle charging device of claim 1 or 2, wherein:
a housing of the power supply side connector includes a receptacle into which a housing of the vehicle side connector is fittable, and a locked hole is formed on the receptacle, thereby forming the locked portion;
the actuator including a locking pin movable back and forth through the locked hole is provided in the housing of the vehicle side connector, and the locking portion is formed by the locking pin; and
a detection switch whose open and closed states are reversed by being pressed by the tip of the locking pin when the locking pin moves to a predetermined advanced position is provided at a position of the housing of the vehicle side connector corresponding to the inside of the locked hole when the both housings are connected, and the locking portion detector is formed by the detection switch.
